# EUROPEAN PATENT APPLICATION

(11) **EP 4 435 600 A1**
(43) Date of publication of application: **25.09.2024**
(21) Application number: 24165093.6
(22) Date of filing: 21.03.2024
(51) Int. Cl.: G06F 9/48

(54) **SYSTEMS AND METHODS FOR EXECUTING COMPUTE FUNCTIONS**

(30) Priority: 23.03.2023 US 202363491913 P; 25.08.2023 US 202318238254
(71) Applicant: Samsung Electronics Co., Ltd., Suwon-si, Gyeonggi-do 16677 (KR); Virginia Tech Intellectual Properties, Inc., Blacksburg, VA 24061 (US)
(72) Inventor: RAMANATHAN, Madhava Krishnan, San Jose, CA, 95134 (US); JAIN, Shashwat, San Jose, CA, 95134 (US); MIN, Changwoo, San Jose, CA, 95134 (US); MARAM, Vishwanath, San Jose, CA, 95134 (US); BIKONDA, Naga Sanjana, San Jose, CA, 95134 (US)
(74) Representative: Kuhnen & Wacker Patent- und Rechtsanwaltsbüro PartG mbB

(57) **Abstract**

Systems and methods for executing compute functions are disclosed. A processing circuit may be configured to: receive a first task from a first application, wherein the first task identifies a first compute function and a second compute function; determine a first order of execution of the first compute function and the second compute function based on first information in the first task; and execute the first compute function and the second compute function according to the first order.

## Description

### FIELD

One or more aspects of embodiments according to the present disclosure relate to computational storage devices, and more particularly, to executing compute functions via the computational storage devices.

### BACKGROUND

Applications may execute different compute functions on large amounts of data. As the amount of data increases, the demand to process the data in an efficient and flexible manner may also increase.

The above information disclosed in this Background section is only for enhancement of understanding of the background of the present disclosure, and therefore, it may contain information that does not form prior art.

### SUMMARY

One or more embodiments of the present disclosure are directed to a storage system comprising a memory and a processing circuit coupled to the memory. The processing circuit may be configured to: receive a first task from a first application, wherein the first task identifies a first compute function and a second compute function; determine a first order of execution of the first compute function and the second compute function based on first information in the first task; and execute the first compute function and the second compute function according to the first order.

According to one or more embodiments, the processing circuit is further configured to: receive a second task from a second application, wherein the second task identifies the first compute function and the second compute function; determine a second order of execution of the first compute function and the second compute function based on second information in the second task, wherein the second order is different from the first order; and execute the first compute function and the second compute function according to the second order.

According to one or more embodiments, the processing circuit is further configured to: determine availability of a resource; and schedule execution of the first task based on the availability of the resource.

According to one or more embodiments, the memory includes a first queue and a second queue, and wherein the processing circuit is further configured to: store the first task in the first queue based on making a first determination about the availability of the resource; and store the first task in the second queue based on making a second determination about the availability of the resource.

According to one or more embodiments, the processing circuit is further configured to: identify a first location in the memory for storing a first input; transmit second information for identifying the first location to the first compute function, wherein the first compute function is configured to retrieve the first input from the first location for performing a first computation, wherein the first compute function is configured to generate a first output based on the first computation and store the first output in a second location of the memory.

According to one or more embodiments, the processing circuit is further configured to: transmit third information for identifying the second location to the second compute function, wherein the second compute function is configured to retrieve data stored in the second location as a second input to the second compute function for performing a second computation, wherein the second compute function is configured to generate a second output based on the second computation and store the second output in a third location of the memory.

According to one or more embodiments, communication with the first compute function for transmitting the second information is via a stream connection.

According to one or more embodiments, the second information is included in a packet based on a set packet format.

According to one or more embodiments, the first information in the first task identifies the first order of execution.

According to one or more embodiments, the storage system further includes an interface accessible to the first application for composing the first compute function and the second compute function according to the first order.

One or more embodiments of the present disclosure are also directed to a method that includes: receiving a first task from a first application, wherein the first task identifies a first compute function and a second compute function; determining a first order of execution of the first compute function and the second compute function based on first information in the first task; and executing the first compute function and the second compute function according to the first order.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a computing environment for controlling execution of compute functions by a computational storage device according to one or more embodiments;
FIG. 2 depicts a conceptual block diagram of a storage processor according to one or more embodiments;
FIG. 3 depicts a block diagram of the queues that are used by an arbiter for task scheduling according to one or more embodiments;
FIG. 4 depicts a conceptual layout diagram of memory management conducted by an arbiter according to one or more embodiments;
FIG. 5 depicts a packet format of a packet generated by an arbiter for transmitting to a compute kernel during an arbiter-kernel communication according to one or more embodiments;
FIG. 6 depicts a flow diagram of a process for managing execution of compute functions by a computational storage device according to one or more embodiments; and
FIG. 7 depicts another flow diagram of a process for managing execution of compute functions by a computational storage device according to one or more embodiments.6

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

An application may need to execute a task that involves different compute functions (also referred to as compute kernels) based on data stored in a storage device. For example, the task may be a machine-learning image preprocessing task. The task may include image decoding, image resizing, image brightness adjustment, and/or the like. It may be desirable to transfer computation (referred to as "offload") of the task to a computational storage device (CSD) that stores the data (e.g., image data) locally. Invoking the CSD to execute the task using an embedded processor, based on locally stored data may reduce network traffic, lower latency, and improve overall system performance.

The execution of the compute function (e.g., the execution pipeline) may be hardwired or preprogrammed on the CSD at the start of the execution. Taking the image preprocessing task as an example, the execution pipeline that may be hardwired onto the CSD may be to perform image decoding first, brightness adjustment second, and image resizing third. With the hardcoded execution pipeline, the CSD may have no flexibility in executing a different compute function, or changing the order of the compute functions.

Hardcoded execution pipelines may prevent sharing of the CSD by multiple tenant in a multi-tenant environment. For example, one tenant may want to use the CSD for offloading one task, and another tenant may want to use the CSD for offloading a different task. Even when both tenants execute the same task, one tenant may want to execute the compute functions in an order different from the order desired by a second tenant. Taking the image preprocessing example, one tenant may want to perform image resizing prior to brightness adjustment, while another tenant may want to perform brightness adjustment prior to image resizing. Furthermore, one tenant may want to replace a compute function with a different compute function, or add a new compute function to the task. For example, one tenant may want to add image saturation to the task, while another tenant may not want to execute image saturation for the task.

In general terms embodiments of the present disclosure are directed to systems and methods for dynamically composing an execution pipeline of compute functions via an interface, and controlling execution of the compute functions by the CSD based on the execution pipeline. The composition of the compute functions may be dynamic in that it may be changed in an ad hoc basis (e.g., at runtime). A host computing device may forward the execution pipeline to the CSD as an input. The CSD may execute the compute functions in the order indicated in the execution pipeline.

In some embodiments, the CSD includes a pipeline manager (referred to as an arbiter) that receives a task including the compute functions to be executed, as input from an application running on the host. The arbiter may manage execution of the compute functions according to the order indicated in the task. In some embodiments, the arbiter schedules the execution of the compute functions by forwarding corresponding input/output (I/O) information across the compute kernels based on the order in the execution pipeline. In some embodiments, unlike a hardwired architecture where the compute kernels communicate with one another to pass I/O data according to a hardwired order of execution, the compute kernels according to the various embodiments communicate with the arbiter (e.g., using I/O streams). It is the arbiter that forwards relevant I/O information to the appropriate compute kernels based on the dynamically generated execution pipeline.

In some embodiments, the arbiter is configured to execute, without limitation, three functions: 1) task scheduling; 2) memory management; and 3) communication.

In performing task scheduling, the arbiter may be configured to schedule execution of the input tasks received from one or more applications, based on availability of resources (e.g., compute kernels, memory, and/or the like) in the CSD. If the needed resources are not available, the task may be placed in a wait queue until the resources become available. Resource management and tracking may thus be performed by the arbiter in the CSD, freeing the host from such task.

In some embodiments, memory management includes assigning an I/O buffer to an input task, and passing the I/O buffer information to the appropriate compute kernels for accessing an application input, executing its logic, and storing an output of the execution. In this regard, the host processor initializes an I/O buffer pool in a shared memory area, and provides a pointer to the buffer pool to the arbiter. The arbiter may divide the buffer into partitions that store the input data (referred to as input sub-buffers), and that store outputs of the computations by the compute kernels (referred to as output sub-buffers). The arbiter may pass the offsets to the input and output sub-buffers to the compute kernels according to their order of execution.

The use of I/O buffers to provide access to input and output data may allow the saving of stream bandwidth in the communication between the arbiter and the compute kernels. For example, instead of passing the application input directly to a compute kernel, the arbiter may store the input in an input sub-buffer, and pass a pointer and/or offset to the input sub-buffer to the compute kernel. In this manner, the arbiter may keep the stream data transfer to a minimum regardless of the input size, helping save bandwidth during communication with the compute kernels. In some embodiments, the arbiter engages in garbage collection of the I/O buffer once the compute kernel finishes execution, and reuses the I/O buffer for future inputs.

In some embodiments, the arbiter engages in communication with the host for exchanging application inputs and the final output of the input task. The communication may be via streams or via memory mapping. The use of streams may allow an application to easily add a new compute kernel to the execution pipeline by, for example, adding a stream connection to the arbiter.

In some embodiments, the arbiter is configured to communicate with the compute kernels independently, via accelerator streams in a bi-directional communication. The arbiter may forward compute requests from the host application to the compute kernels based on the dynamic order requested by the application. In some embodiments, a standard packet format may be used for establishing a consistent communication between the arbiter and the compute kernel.

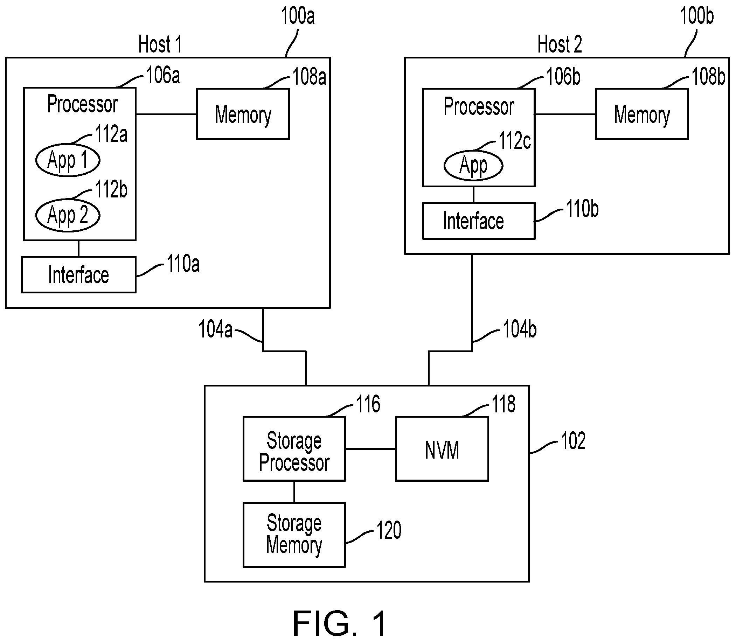

FIG. 1 depicts a block diagram of a computing environment for controlling execution of compute functions by a CSD according to one or more embodiments. The system may include one or more host computing devices 100a, 100b (collectively referenced as host 100) coupled to a CSD 102 over one or more data communication links 104a, 104b (collectively referenced as 104). The host computing devices 100 may be associated with different tenants in a cloud computing environment. The different tenants may share the computing and storage capabilities of the CSD 102.

The data communication link 104 may facilitate communications (e.g., using a connector and a protocol) between the host 100 and the CSD 102. In some embodiments, the data communication link 104 may facilitate the exchange of commands and responses to the commands between the host 100 and the CSD 102. In some embodiments, the data communication link 104 may facilitate data transfers between the host 100 and the CSD 102. In this regard, in various embodiments, the data communications link 104 (e.g., the connector and the protocol thereof) may include (or may conform to) a Compute Express Link (CXL), Cache Coherent Interconnect for Accelerators (CCIX), Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like. In other embodiments, the data communications link 104 (e.g., the connector and the protocol thereof) may include (or may conform to) various general-purpose interfaces, for example, such as Ethernet, Universal Serial Bus (USB), and/or the like.

The host 100 may include a processor 106a, 106b (collectively referenced as 106), memory 108a, 108b (collectively referenced as 108), and a host interface 110a, 110b (collectively referenced as 110). The processor 106 may be a general purpose processor, such as, for example, a central processing unit (CPU) core of the host 100. The memory 108 may include, for example, a random access memory (RAM) (e.g., a dynamic random-access memory (DRAM)), read-only memory (ROM), and the like.

The processor 106 may be configured to run one or more applications 112 based on instructions stored in the memory 108. The application 112 may be any application configured to transmit requests (e.g., data access requests, program execution requests, etc.) to the CSD 102. For example, the application 112 may be a big data analysis application, e-commerce application, database application, machine learning application, and/or the like.

In some embodiments, the application 112 includes one or more programs, tasks, or routines (collectively referred to as tasks) that may be offloaded to a CSD. The task may be one that requires a heavy amount of I/O requests to and from the CSD 102, and/or uses a large amount of memory and computing resources of the host 100. For example, the task may be an image pre-processing task, database filtering task, a scan operation, and/or the like. The task may include one or more compute functions that may be executed according to one order by one application (e.g., application 112a), and according to a different order in another application (e.g., application 112b or application 112c). The offloading of the task may be desirable if the CSD 102 is able to execute the program more efficiently than the host 100. The application 112 may receive results from executing the one or more tasks. The results may be used by the application 112 to generate an output.

In some embodiments, the host interface 110 includes an application programming interface (API), graphical user interface, and/or the like (collectively referred to as an API) configured to interface between the application and the CSD 102. In some embodiments, the API provides commands that may be accessed by a developer to create a compute function to be offloaded to the CSD 102. The API may be based, for example, on the SNIA Computational Storage Architecture and Programming Model, although embodiments are not limited thereto. In some embodiments, the API allows the developer to dynamically compose an execution pipeline based on the generated compute functions in a relatively easy and straightforward manner, without the need to understand details about scheduling, memory management, or the like. In this regard, the API may allow the developer pick and choose from among different compute functions to be included in the execution pipeline, and further pick an order of execution of the compute functions. In some embodiments, the application 112 identifies the composed execution pipeline and forwards the compute functions in the execution pipeline as a task or input to the CSD 102.

In some embodiments, the CSD 102 includes a storage processor 116, storage memory 120, and non-volatile memory (NVM) 118. The storage processor 116 may include a processing circuit such as, for example, a Field Programmable Gate Array (FPGA), SSD controller, an application specific integrated circuit (ASIC), a discrete coprocessor, combinations thereof, and/or the like. In some embodiments, the storage processor 116 is configured with one or more compute kernels for performing computations or functions (collectively referred to as computations) identified in a task offloaded to the CSD 102. In some embodiments, the order of the execution of the compute kernels is identified in the task provided by the application 112.

The storage memory 120 may be high-performing memory of the CSD 102, and may include (or may be) volatile memory, for example, such as DRAM, but the present disclosure is not limited thereto, and the storage memory 120 ay be any suitable kind of high-performing volatile or non-volatile memory. In some embodiments, the storage memory 120 includes a common memory area (CMA) that is accessible to the host over the data communication link 104. The CMA may be used for storing inputs or metadata (e.g., arguments from the application 112) for performing computations by the one or more compute kernels. The CMA may also be used for storing results of the computations from the one or more compute kernels. Using the CMA to store the input and output data may avoid unnecessary transfer of data (e.g., between the compute kernels) through streams.

In some embodiments, the NVM 118 persistently stores data received, for example, from the host 100. The data may be retrieved by the storage processor 116 for performing computations by the one or more compute kernels. The NVM 118 may include, for example, NAND flash memory, but the present disclosure is not limited thereto, and the NVM 118 may include any suitable kind of memory for persistently storing the data according to an implementation of the CSD 102 (e.g., magnetic disks, tape, optical disks, and/or the like).

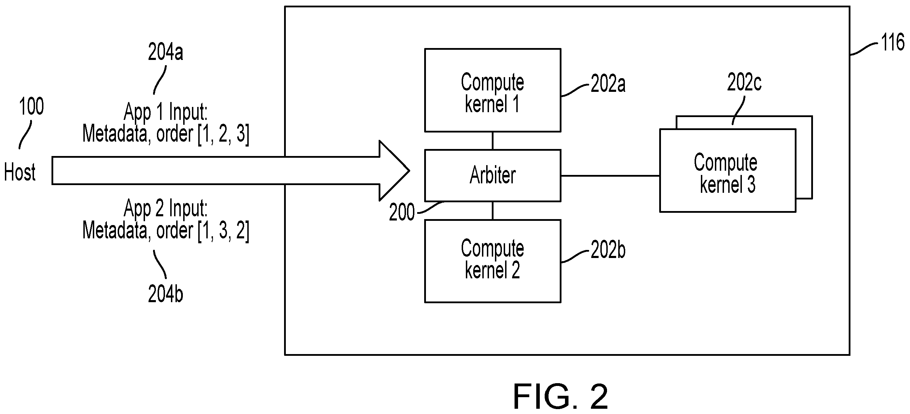

FIG. 2 depicts a conceptual block diagram of the storage processor 116 according to one or more embodiments. In some embodiments, the storage processor 116 includes a pipeline manager (referred to as an "arbiter") 200 and one or more compute kernels 202a-202c (collectively referenced as 202). The compute kernels 202 may be identified via a kernel identifier (ID) (e.g., K1, K2, K3).

In some embodiments, the arbiter 200 receives an input or task 204a, 204b (collectively referenced as 204) from an application 112, and manages execution of the compute functions identified in the task, in the order that is identified in the task. The arbiter 200 may further manage the storage memory 120 and communication with the compute kernels for executing compute functions.

In some embodiments, a first application (e.g., application 112a) provides a first task (e.g., task 204a) to the CSD 102 arbiter 200 via the host interface 110a, and a second application (e.g., application 112b or 112c) provides a second task (e.g., task 204b) to the CSD via the host interface 110a or 110b. The first task 204a may include input metadata and one or more kernels IDs of the compute kernels to be invoked (e.g., K1, K2, K3). The kernel IDs may be listed in a first order of execution that is identified by the first application.

The second task 240b may include second input metadata and a second list of kernel IDs (e.g., K1, K3, K2), listed in an order of execution desired by the second application . The second order of execution may be different from the first. The input metadata in the tasks 204a, 204b may include, for example, identification of data stored in the NVM 118 (e.g., identification of an image for which computation is to be performed), address of a buffer in the CMA allocated for the task, and/or other arguments or parameters needed by the compute kernels for performing a corresponding computation.

In some embodiments, a compute kernel 202 includes instructions for performing a computation. The computation may be based on data stored in the NVM 118, and/or data output by another kernel as a result of its computation using the data stored in the NVM. In some embodiments, the storage processor 116 executes multiple instances of the one or more kernels (e.g., multiple instances of compute kernel 3 202c) for load balancing and managing bottlenecks in the execution of multiple tasks.

In some embodiments, the arbiter 200 is configured to perform, without limitations, the following functions: 1) task scheduling; 2) memory management; and 3) communication. In performing task scheduling, the arbiter 200 may be configured to schedule execution of the input tasks received from one or more applications, based on availability of resources in the CSD 102. For example, the arbiter 200 may identify the compute kernels, amount of memory, and/or other resources needed by the input task, and determine whether the needed resources are available on the CSD. For example, the arbiter 200 may determine whether there are free instances of the compute kernels 202 identified in the task.

In some embodiments, the arbiter 200 receives the tasks 204 and stores the tasks in a queue. The type of queue in which the task is stored may depend on the availability of the resources in the CSD 102.

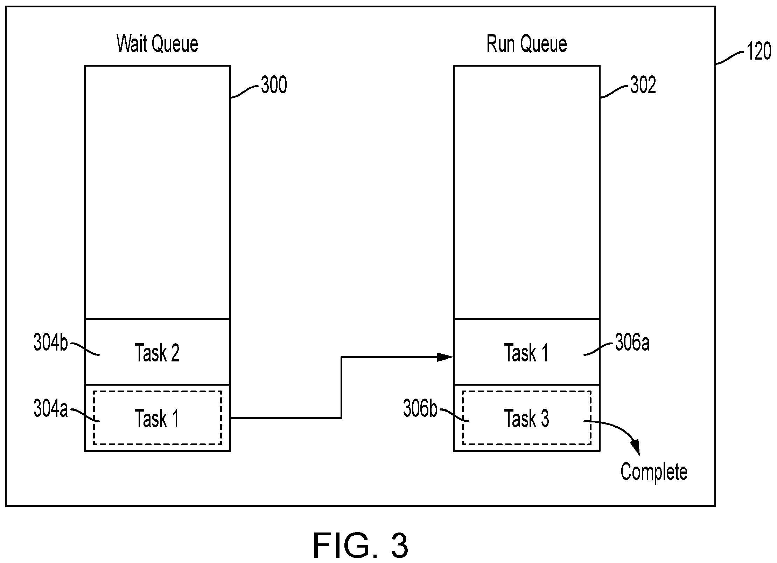

FIG. 3 depicts a block diagram of the queues that are used by the arbiter 200 for task scheduling according to one or more embodiments. In some embodiments, the CSD 102 includes at least a wait queue 300 and a run queue 302. In some embodiments, the wait queue 300 stores tasks 304a, 304b (collectively referenced as 304) that are received by the arbiter 200, that await CSD resources to become available prior to executing the task. In some embodiments, an entry in the wait queue 300 stores, for the corresponding task 304, task information including the kernel IDs of the compute kernels identified in the task. In some embodiments, the entry in the wait queue 300 for the corresponding task further stores an amount of memory needed for executing the task (e.g., the amount of memory for storing the input data and the amount of memory for storing the output data).

In some embodiments, the wait queue is ordered in a first-in-first-out (FIFO) manner. The tasks 304 in the wait queue are moved to the run queue 302 and scheduled for execution in the order of their arrival, when the needed compute resources become available.

In some embodiments, the run queue 302 stores tasks 306a, 306b (collectively referenced as 306) that are ready for execution. In some embodiments, an entry in the run queue 302 stores, for the corresponding task 306, task information including the kernel IDs of the compute kernels identified in the task. In some embodiments, a waiting task (e.g., task 304a) in the wait queue 300 are scheduled for execution and moved from the wait queue 300 to the run queue 302 when compute resources become available.

In some embodiments, the tasks 306 in the run queue are periodically polled by the arbiter 200 (e.g., in a non-blocking manner), for determining whether one or more of the tasks have been completed. A task that is completed (e.g., task 306b) is removed from the run queue 306b. The final output of the completed task (e.g., the output of the last executed compute function in the compute pipeline for the task) is transmitted to the application 112.

In some embodiments, memory management by the arbiter 200 includes management of one or more I/O buffers in the storage memory 120. The I/O buffers may be accessed by a first compute kernel 202 for accessing the application input, executing its logic, and storing the output of the execution. The arbiter 200 may forward the output of the execution to a next compute kernel 202 in the execution pipeline (e.g., the output of the first compute kernel become the input of the next compute kernel).

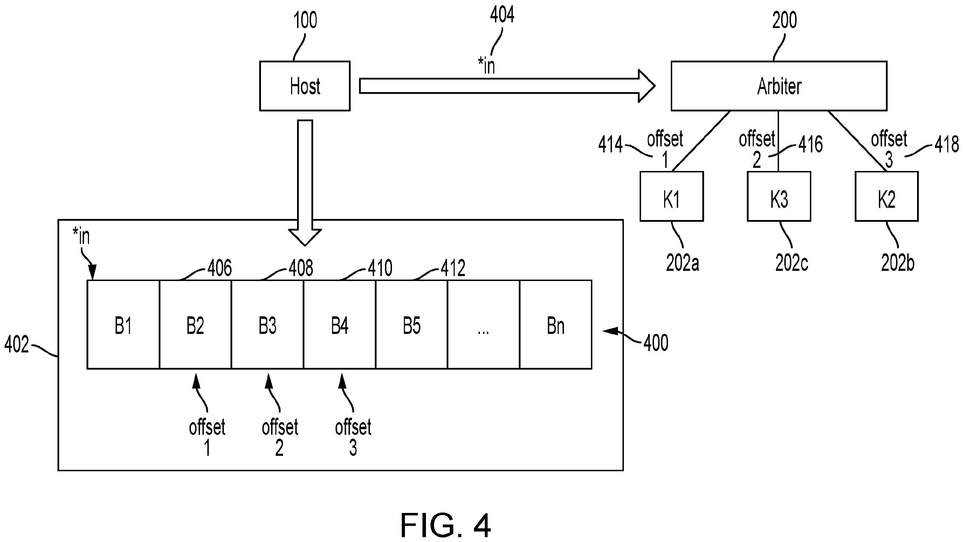

FIG. 4 depicts a conceptual layout diagram of the memory management conducted by the arbiter 200 according to one or more embodiments. In some embodiments, a buffer pool 400 is allocated in the storage memory 120 during an initialization time. The buffer pool may be initialized by the host processor 106 in a CMA 402 portion of the storage memory 120. In some embodiments, the host processor 106 provides a pointer 404 to the buffer pool 400 to the arbiter 200. The arbiter 200 manages use of the buffer and streams offsets to appropriate portions of the buffer to the compute kernels 202, for retrieving input data and storing output data.

In some embodiments, the arbiter 200 stores all or a portion of the application input into a first portion of the buffer (referred to as a sub-buffer), such as, for example, sub-buffer B2 406. The application input may include, for example, the input metadata included in the task (e.g., task 204). Assuming, for purpose of illustration, that the order of compute kernels in the execution pipeline is K1 202a, K3 202c, and K2 202b, the arbiter 200 may pass an offset (e.g., offset 1 414) to the input sub-buffer B2, to K1 202a. In some embodiments, K1 202a uses the offset information for accessing the input data in sub-buffer B2 406, performs a computation based on the input data, and generates an output. The output of K1 202a may be stored in sub-buffer B3 408. The offset to sub-buffer B3 408 for use by K1 202a to store its output may be computed and passed to K1 202a by the arbiter 200.

In some embodiments, the output of K1 202a that is stored in sub-buffer B3 408 is used as the input data for K3 202c, the next compute kernel in the execution pipeline. In this regard, the arbiter 200 receives a completion message from K1 202a, and provides to K3 202c, the offset (e.g., offset 2 416) to sub-buffer B3 408. K3 202c uses the offset to sub-buffer B3 408 to identify the portion of the buffer that contains its input data, and retrieves the data from the identified portion of the buffer. K3 202c uses the retrieved data to perform a computation and generate an output. The output from K3 202c is stored in sub-buffer B4 410. The arbiter 200 receives a completion message from K3 202c, and provides to K4 202b, the offset to sub-buffer B4 410 (e.g., offset 3 418). K4 202b retrieves the data from B4 410 based on the received offset, and performs a computation. The output of the computation is stored in B5 412. In some embodiments, the output in B5 412 is a final output of the task. The arbiter 200 retrieves the output from B5 and transmits it to the host 100.

As a person of skill in the art should appreciate, the use of the sub-buffers to store input and output data while the arbiter 200 forwards offsets to the buffer to the various compute kernels avoids passing the input data directly to the compute kernels 202. In this manner, regardless of the size of the input data, the arbiter-kernel communication bandwidth may be kept at a minimum. In some embodiments, the arbiter 200 performs garbage collection on the sub-buffers once the compute kernels 202 finish their execution, and reuses the sub buffers for the future inputs.

In some embodiments, the arbiter 200 engages in communication with the host 100 (host-arbiter communication) as well as communication with the compute kernels 202 (arbiter-kernel communication). In some embodiments, the host-arbiter communication occurs when the host 100 transmits a task to the arbiter 200, and when the arbiter 200 transmits a final output of the task, to the host 100. In some embodiments, the host-arbiter communication is established via streams. In some embodiments, the host-arbiter communication is established via memory mapping.

In some embodiments, the arbiter-kernel communication is established via streams. The streams may be used to pass offsets to the appropriate sub-buffers that store the input data for performing a computation by a compute kernel 202, and offsets to the appropriate sub-buffers that are to store the output of the computation by the compute kernel.

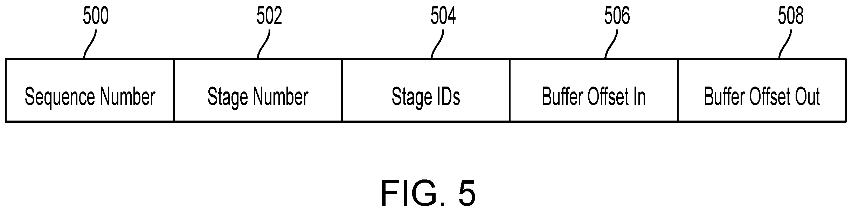

FIG. 5 depicts a packet format of a packet generated by the arbiter 200 for transmitting to a compute kernel 202 during an arbiter-kernel communication according to one or more embodiments. In some embodiments, the packet format includes a sequence number 500, stage number 502, stage IDs 504, input buffer offset 506, and output buffer offset 508, although embodiments are not limited thereto. The sequence number 500 may include an identifier to a pipeline sequence (e.g., an order of the compute kernel) for the current task. The stage number 502 may include an index of operation in the pipeline kernel stage list (e.g., identification of a current operation happening within the pipeline of multiple compute kernels). The stage IDs 504 may include a sequential list of all the compute kernel IDs in the current execution pipeline. As an example, say an execution task consists of three compute kernels. The sequence number 500 maybe a uniformly incrementing integer (e.g., 1 or 2 or 3). The stage number 502 maybe any non-zero compute kernel identifier (e.g., 101 or 103 or 102). The stage IDs 504 may include a sequential list of compute kernel identifiers (e.g., [101, 103, 102] or [103, 102, 101] or [102, 103, 101]). The input buffer offset 506 may include an offset to the portion of the buffer pool 400 that stores the output from the previous compute kernel in the pipeline. The output buffer offset 508 may include an offset to the portion of the buffer 400 that will store the output from the current compute kernel in the pipeline.

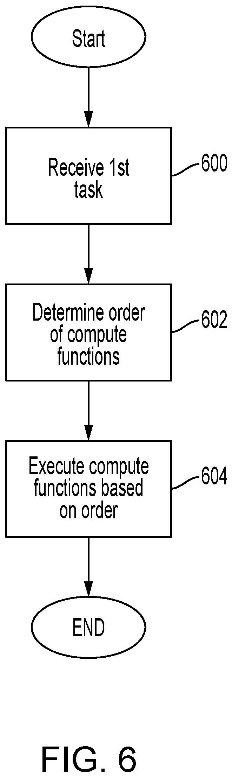

FIG. 6 depicts a flow diagram of a process for managing execution of compute functions by the CSD 102 (e.g., via the arbiter 200), according to one or more embodiments. The process starts, and in act 600, the CSD 102 receives a task from an application 112 running on the host 100. The application may identify a first compute function (e.g., a first compute kernel ID) and a second compute function (e.g., a second compute kernel ID), in an order in which the compute functions are to be executed. Of course, other mechanisms for identifying the compute functions and/or their orders are also contemplated. The task may also identify metadata (e.g., arguments from the application 112) for performing the computations by the first and second compute functions.

In act 602, the CSD 102 determines an order of execution of the compute functions based on information in the task. The information may include, for example, the order in which the compute functions are listed in the received task.

In act 604, the CSD 102 executes the first compute function and the second compute function according to the determined order. In this regard, the arbiter 200 may determine availability of the computing resources (e.g., compute kernels 202) for executing the compute functions. The arbiter 200 may schedule execution of the task based on the determined availability of the compute resources.

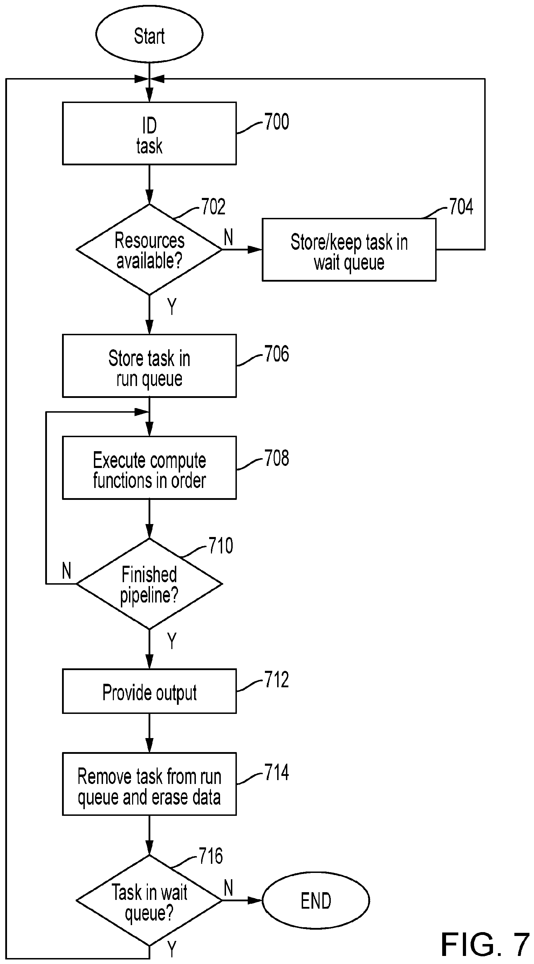

FIG. 7 depicts another flow diagram of a process for managing execution of compute functions by the CSD 102 (e.g., via the arbiter 200), according to one or more embodiments. The process starts, and in act 700, the CSD 102 identifies a task received from an application 112 running on the host 100. The task may identify metadata for performing the task, and one or more compute kernel IDs for performing one or more computations associated with the task. The compute kernel IDs may be listed in an order of execution in the execution pipeline.

In act 702, the CSD 102 determines whether there are enough computing resources available for executing the task. For example, the arbiter 200 may identify the compute kernels 202, amount of storage memory 120, and/or other resources needed by the task, and determine whether the needed resources are available on the CSD 102.

If the resources are insufficient, the arbiter 200, in act 704, adds the task into the wait queue 300 (FIG. 3) until resources become available. The arbiter 200 may continue checking for availability of the resources, and continue keeping the task in the wait queue 300 until resources become available.

Referring again to act 702, if the computing resources for executing the task are available, the arbiter 200, in act 706, schedules the task for execution and stores the task in the run queue 302. In this regard, if the task had been waiting in the wait queue 300 for execution, the arbiter 200 may move the task from the wait queue 300 to the run queue 302.

In act 708, the arbiter 200 executes the compute functions indicated for the task. In this regard, the arbiter 200 determines the order of the compute functions, and communicates with the compute kernels 202, in the order indicated, for forwarding input and output offsets of the input and output sub-buffers in the buffer pool 400 for respectively retrieving input data and storing results of the computation by the compute function.

In act 710, a determination is made as to whether all the compute functions in the execution pipeline for the task have been completed. If the answer is YES, the arbiter 200 provides, in act 712, the output of the final compute function to the application 112.

In act 714, the arbiter 200 removes the completed task from the run queue 302, and erases data (e.g., performs garbage collection) for the sub-buffers used for the task. The sub-buffers may then be reused for other tasks.

In act 716, a determination is made as to whether there are tasks in the wait queue 300 that are awaiting execution. If the answer is YES, the arbiter 200 repeats the process of checking for available resources and scheduling the task for execution as described above.

As a person of skill in the art should recognize, embodiments of the present disclosure allow the creation of a dynamically composable execution pipeline which is more generic and flexible than a hardwired execution pipeline. The dynamically composable execution pipeline may allow the sharing of the CSD 102 by multiple applications and/or tenants that may want different compute kernels in the execution pipeline, and/or different order of execution of the compute kernels. In addition, the host interface 110 available to a user to create the compute kernels and their execution order without the need to understand or control scheduling, memory management, or communication between the compute kernels, may make the programming and offloading of compute tasks easier and more straightforward.

One or more embodiments of the present disclosure may be implemented in one or more processors (also referred to as processing circuits). The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for executing compute functions have been specifically described and illustrated herein, many modifications and variations will be apparent to those skilled in the art. Accordingly, it is to be understood that systems and methods for executing compute functions constructed according to principles of this disclosure may be embodied other than as specifically described herein. The disclosure is also defined in the following claims, and equivalents thereof.

The systems and methods for processing storage transactions may contain one or more combination of features set forth in the below statements.

Statement 1. A storage system comprising: a memory; and a processing circuit coupled to the memory, the processing circuit being configured to: receive a first task from a first application, wherein the first task identifies a first compute function and a second compute function; determine a first order of execution of the first compute function and the second compute function based on first information in the first task; and execute the first compute function and the second compute function according to the first order.

Statement 2. The storage system of Statement 1, wherein the processing circuit is further configured to: receive a second task from a second application, wherein the second task identifies the first compute function and the second compute function; determine a second order of execution of the first compute function and the second compute function based on second information in the second task, wherein the second order is different from the first order; and execute the first compute function and the second compute function according to the second order.

Statement 3. The storage system of Statement 1, wherein the processing circuit is further configured to: determine availability of a resource; and schedule execution of the first task based on the availability of the resource.

Statement 4. The storage system of Statement 3, wherein the memory includes a first queue and a second queue, and wherein the processing circuit is further configured to: store the first task in the first queue based on making a first determination about the availability of the resource; and store the first task in the second queue based on making a second determination about the availability of the resource.

Statement 5. The storage system of Statement 1, wherein the processing circuit is further configured to: identify a first location in the memory for storing a first input; and transmit second information for identifying the first location to the first compute function, wherein the first compute function is configured to retrieve the first input from the first location for performing a first computation, wherein the first compute function is configured to generate a first output based on the first computation and store the first output in a second location of the memory.

Statement 6. The storage system of Statement 5, wherein the processing circuit is further configured to: transmit third information for identifying the second location to the second compute function, wherein the second compute function is configured to retrieve data stored in the second location as a second input to the second compute function for performing a second computation, wherein the second compute function is configured to generate a second output based on the second computation and store the second output in a third location of the memory.

Statement 7. The storage system of Statement 5, wherein communication with the first compute function for transmitting the second information is via a stream connection.

Statement 8. The storage system of Statement 5, wherein the second information is included in a packet based on a set packet format.

Statement 9. The storage system of Statement 1, wherein the first information in the first task identifies the first order of execution.

Statement 10. The storage system of Statement 1 further comprising: an interface accessible to the first application for composing the first compute function and the second compute function according to the first order.

Statement 11. A method comprising: receiving a first task from a first application, wherein the first task identifies a first compute function and a second compute function; determining a first order of execution of the first compute function and the second compute function based on first information in the first task; and executing the first compute function and the second compute function according to the first order.

Statement 12. The method of Statement 11 further comprising: receiving a second task from a second application, wherein the second task identifies the first compute function and the second compute function; determining a second order of execution of the first compute function and the second compute function based on second information in the second task, wherein the second order is different from the first order; and executing the first compute function and the second compute function according to the second order.

Statement 13. The method of Statement 11 further comprising: determining availability of a resource; and scheduling execution of the first task based on the availability of the resource.

Statement 14. The method of Statement 13 further comprising: storing the first task in a first queue based on making a first determination about the availability of the resource; and storing the first task in a second queue based on making a second determination about the availability of the resource.

Statement 15. The method of Statement 11 further comprising: identifying a first location in a memory for storing a first input; and transmitting second information for identifying the first location to the first compute function, wherein the first compute function retrieves the first input from the first location for performing a first computation, wherein the first compute function generates a first output based on the first computation and stores the first output in a second location of the memory.

Statement 16. The method of Statement 15 further comprising: transmitting third information for identifying the second location to the second compute function, wherein the second compute function retrieves data stored in the second location as a second input to the second compute function for performing a second computation, wherein the second compute function generates a second output based on the second computation and stores the second output in a third location of the memory.

Statement 17. The method of Statement 15, wherein communication with the first compute function for transmitting se is via a stream connection.

Statement 18. The method of Statement 15, wherein the second information is included in a packet based on a set packet format.

Statement 19. The method of Statement 11, wherein the first information in the first task identifies the first order of execution.

Statement 20. The method of Statement 11 further comprising: composing, via an interface accessible to the first application, the first compute function and the second compute function according to the first order.

## Claims

1. A storage system comprising:
a memory; and
a processing circuit coupled to the memory, the processing circuit being configured to:
receive a first task from a first application, wherein the first task identifies a first compute function and a second compute function;
determine a first order of execution of the first compute function and the second compute function based on first information in the first task; and
execute the first compute function and the second compute function according to the first order.

2. The storage system of claim 1, wherein the processing circuit is further configured to:
receive a second task from a second application, wherein the second task identifies the first compute function and the second compute function;
determine a second order of execution of the first compute function and the second compute function based on second information in the second task, wherein the second order is different from the first order; and
execute the first compute function and the second compute function according to the second order.

3. The storage system of claim 1 or 2, wherein the processing circuit is further configured to:
determine availability of a resource; and
schedule execution of the first task based on the availability of the resource.

4. The storage system of claim 3, wherein the memory includes a first queue and a second queue, and wherein the processing circuit is further configured to:
store the first task in the first queue based on making a first determination about the availability of the resource; and
store the first task in the second queue based on making a second determination about the availability of the resource.

5. The storage system of any one of claims 1 to 4, wherein the processing circuit is further configured to:
identify a first location in the memory for storing a first input; and
transmit second information for identifying the first location to the first compute function, wherein the first compute function is configured to retrieve the first input from the first location for performing a first computation, wherein the first compute function is configured to generate a first output based on the first computation and store the first output in a second location of the memory.

6. The storage system of claim 5, wherein the processing circuit is further configured to:
transmit third information for identifying the second location to the second compute function, wherein the second compute function is configured to retrieve data stored in the second location as a second input to the second compute function for performing a second computation, wherein the second compute function is configured to generate a second output based on the second computation and store the second output in a third location of the memory.

7. The storage system of claim 5 or 6, wherein communication with the first compute function for transmitting the second information is via a stream connection.

8. The storage system of any one of claims 5 to 7, wherein the second information is included in a packet based on a set packet format.

9. The storage system of any one of claims 1 to 8, wherein the first information in the first task identifies the first order of execution.

10. The storage system of any one of claims 1 to 9, further comprising:
an interface accessible to the first application for composing the first compute function and the second compute function according to the first order.

11. A method comprising:
receiving a first task from a first application, wherein the first task identifies a first compute function and a second compute function;
determining a first order of execution of the first compute function and the second compute function based on first information in the first task; and
executing the first compute function and the second compute function according to the first order.

12. The method of claim 11 further comprising:
receiving a second task from a second application, wherein the second task identifies the first compute function and the second compute function;
determining a second order of execution of the first compute function and the second compute function based on second information in the second task, wherein the second order is different from the first order; and
executing the first compute function and the second compute function according to the second order.

13. The method of claim 11 or 12 further comprising:
determining availability of a resource; and
scheduling execution of the first task based on the availability of the resource.

14. The method of claim 13 further comprising:
storing the first task in a first queue based on making a first determination about the availability of the resource; and
storing the first task in a second queue based on making a second determination about the availability of the resource.

15. The method of any one of claims 11 to 14 further comprising:
identifying a first location in a memory for storing a first input; and
transmitting second information for identifying the first location to the first compute function, wherein the first compute function retrieves the first input from the first location for performing a first computation, wherein the first compute function generates a first output based on the first computation and stores the first output in a second location of the memory.
